(19) **Europäisches Patentamt European Patent Office Office européen des brevets**

(11) **EP 4 656 683 A1**

(12) **EUROPEAN PATENT APPLICATION**
published in accordance with Art. 153(4) EPC

(43) Date of publication:
**03.12.2025 Bulletin 2025/49**

(21) Application number: **23918671.1**

(22) Date of filing: **26.12.2023**

(51) International Patent Classification (IPC):
**C08L 77/00** (2006.01)   **C08L 101/02** (2006.01)

(52) Cooperative Patent Classification (CPC):
**C08L 77/00; C08L 101/02**

(86) International application number:
**PCT/JP2023/046656**

(87) International publication number:
**WO 2024/157717 (02.08.2024 Gazette 2024/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.01.2023   JP 2023011085**

(71) Applicant: **TOYOBO MC Corporation**
**Osaka-shi, Osaka 530-0001 (JP)**

(72) Inventors:
 • **KUBO, Maki**
  **Otsu-shi, Shiga 520-0292 (JP)**

 • **TAMATSUSHIMA, Makoto**
  **Otsu-shi, Shiga 520-0292 (JP)**
 • **IWAMURA, Kazuki**
  **Otsu-shi, Shiga 520-0292 (JP)**
 • **ISHIHARA, Ayumi**
  **Otsu-shi, Shiga 520-0292 (JP)**
 • **OKAMOTO, Shinji**
  **Otsu-shi, Shiga 520-0292 (JP)**
 • **AYUZAWA, Yoshitaka**
  **Otsu-shi, Shiga 520-0292 (JP)**

(74) Representative: **Vossius & Partner**
**Patentanwälte Rechtsanwälte mbB**
**Siebertstrasse 3**
**81675 München (DE)**

(54) **POLYAMIDE COMPOSITION AND MOLDED ARTICLE**

(57)   An object is to provide a polyamide composition that can be molded into a molded article, which is excellent in impact resistance at low temperatures and also excellent in toughness at low temperatures. Another object is to provide a molded article, which is excellent in impact resistance at low temperatures and also excellent in toughness at low temperatures. The polyamide composition contains an aliphatic polyamide and an elastomer having a reactive functional group. When the polyamide composition is allowed to flow at 270°C and then injected into a mold at 80°C to mold a test piece, the stable type fraction of the crystal structure of the aliphatic polyamide in the test piece is 0.55 or more and less than 1.00. The molded article contains an aliphatic polyamide and an elastomer having a reactive functional group. The stable type fraction of the crystal structure of the aliphatic polyamide in the molded article is 0.55 or more and less than 1.00. The stable type fraction is represented by $S_p/(S_p + M_p)$. $S_p$ is the peak area attributed to stable type crystals in an X-ray diffraction diagram. $M_p$ is the peak area attributed to metastable type crystals in the X-ray diffraction diagram.

EP 4 656 683 A1

**Description**

TECHNICAL FIELD

The present invention relates to a polyamide composition and a molded article.

BACKGROUND ART

Polyamide, especially polyamide 6, is equipped with mechanical properties, heat resistance, chemical resistance, and moldability in a well balanced manner, and is widely used in electrical and electronic parts, automobile parts, and the like. However, since the applications in which molded articles obtained using polyamide alone can be used are limited, improvements of the molded articles by alloying with other resins are often made (see Patent Document 1). For example, an improvement in the impact resistance is made by dispersing modified polyolefin particles in a polyamide matrix (see Patent Document 2).

The required properties for molded articles obtained using polyamide are sophisticated and diversified along with the growing interest in environmental issues and reduction in greenhouse gas, and there is also an increasing demand for mechanical properties at around -40°C (see Patent Document 3).

PRIOR ART DOCUMENTS

PATENT DOCUMENTS

Patent Document 1: JP-B-55-044108
Patent Document 2: JP-A-9-31325
Patent Document 3: JP-A-10-204290

SUMMARY OF THE INVENTION

PROBLEMS TO BE SOLVED BY THE INVENTION

An object of the present invention is to provide a polyamide composition that can be molded into a molded article, which is excellent in impact resistance at low temperatures and also excellent in toughness at low temperatures. Another object of the present invention is to provide a molded article which is excellent in impact resistance at low temperatures and also excellent in toughness at low temperatures.

MEANS FOR SOLVING THE PROBLEMS

The present inventors have conducted studies to solve this problem and have found out that the yield strain (specifically, the tensile yield strain) of a molded article at a low temperature of -40°C is affected by the crystal structure of the aliphatic polyamide contained in the molded article. In addition to this, the present inventors have also found out that the crystal structure of the aliphatic polyamide can be adjusted mainly by an elastomer.

The present invention, which has been completed based on these findings, has the following configuration [1].

[1] A polyamide composition containing:

an aliphatic polyamide; and
an elastomer having a reactive functional group, in which
when the polyamide composition is allowed to flow at 270°C and then injected into a mold at 80°C to mold a test piece, a stable type fraction of a crystal structure of the aliphatic polyamide in the test piece is 0.55 or more and less than 1.00, in which
the stable type fraction is represented by $S_p/(S_p + M_p)$,
where $S_p$ is a peak area attributed to a stable type crystal in an X-ray diffraction diagram, and
$M_p$ is a peak area attributed to a metastable type crystal in the X-ray diffraction diagram.

According to [1], as the polyamide composition contains an elastomer having a reactive functional group, the impact resistance of a molded article produced using the polyamide composition, specifically, the impact resistance at low temperatures (for example, -40°C), can be improved. Moreover, as the elastomer has a reactive functional group, it is possible to enhance the compatibility of the elastomer with the aliphatic polyamide, and as a result, excessive pulsation of the strand during production of the polyamide composition can be suppressed.

Moreover, as the stable type fraction (that is, the stable type fraction of the crystal structure of the aliphatic polyamide in a test piece molded by allowing the polyamide composition to flow at 270°C and then injecting the polyamide composition into a mold at 80°C) is 0.55 or more, the toughness of a molded article produced using the polyamide composition, specifically, the toughness at low temperatures (for example, -40°C) can be improved. This will be explained. In polyamide 6, $\alpha$-type crystals and $\gamma$-type crystals are known. In $\alpha$-type crystals, adjacent molecular chains that make up the $\alpha$-type crystals are aligned in opposite directions to each other, that is, in antiparallel. The molecular chains that make up the $\alpha$-type crystals are fully extended and form hydrogen bonds with adjacent molecular chains. In $\alpha$-type crystals, the sheets formed by these molecular chains are stacked one on top of the other. Meanwhile, in $\gamma$-type crystals, adjacent molecular chains that make up the $\gamma$-type crystals are aligned in parallel. The molecular chains that make up the $\gamma$-type crystals have a somewhat shrunken conformation compared to the molecular chains that make up the $\alpha$-type crystals, and form hydrogen bonds with adjacent molecular chains. In $\gamma$-type crystals, pleated sheets formed by these molecular chains are stacked one on top of the other. $\gamma$-Type crystals having such a structure are crystals that are less dense and are inferior in stability than $\alpha$-type crystals. In other words, $\alpha$-type crystals are denser and are superior in stability than $\gamma$-type crystals. It can be said that $\alpha$-type crystals are less likely to crumble when subjected to external force (for example, when subjected to a tensile test) than $\gamma$-type crystals. According to [1], since the stable type fraction is 0.55 or more, stable type crystals (for example, $\alpha$-type crystals when the aliphatic polyamide is polyamide 6), which are less likely to crumble than metastable type crystals (for example, $\gamma$-type crystals when the aliphatic polyamide is polyamide 6), can be generated to a certain degree or more in a molded article produced using the polyamide composition, and therefore, the tensile yield strain, specifically the tensile yield strain at low temperatures, can be improved. In other words, the toughness at low temperatures can be improved. Thus, in this specification, improvement in tensile yield strain at low temperatures is also expressed as improvement in toughness at low temperatures.

In the present invention, the following configuration of [2] is preferable.

The polyamide composition according to [1], in which

the aliphatic polyamide is polyamide 6,
the stable type crystal is an $\alpha$-type crystal, and
the metastable type crystal is a $\gamma$-type crystal.

The polyamide composition according to [2] can be rephrased as follows.
A polyamide composition containing:

polyamide 6; and
an elastomer having a reactive functional group, in which
when the polyamide composition is allowed to flow at 270°C and then injected into a mold at 80°C to mold a test piece, an $\alpha$-type fraction of a crystal structure of the polyamide 6 in the test piece is 0.55 or more and less than 1.00, in which
the $\alpha$-type fraction is represented by $\alpha_p/(\alpha_p + \gamma_p)$,
where $\alpha_p$ is a peak area attributed to an $\alpha$-type crystal in an X-ray diffraction diagram, and
$\gamma_p$ is a peak area attributed to a $\gamma$-type crystal in the X-ray diffraction diagram.

In the present invention, the following configurations of [3] to [6] are preferable.
[3]
The polyamide composition according to [1] or [2], in which a content of the elastomer is 1 part by mass to 18 parts by mass with respect to 100 parts by mass of a sum of a content of the aliphatic polyamide and the content of the elastomer.
According to [3], as the content of the elastomer is 18 parts by mass or less, excessive pulsation of the strand during production of the polyamide composition can be further suppressed. In addition to this, it may be possible to avoid an excessive increase in viscosity when the polyamide composition is allowed to flow. Meanwhile, as the content of the elastomer is 1 part by mass or more, the impact resistance of a molded article produced using the polyamide composition, specifically, the impact resistance at low temperatures can be further improved.
[4]
The polyamide composition according to any one of [1] to [3], in which the reactive functional group is at least one selected from the group consisting of an amino group, an epoxy group, and a hydroxyl group.
According to [4], as the reactive functional group is at least one selected from the group consisting of an amino group, an epoxy group, and a hydroxyl group, the stable type fraction of a molded article produced using the polyamide composition can be increased. This will be explained. An amino group, an epoxy group and a hydroxyl group do not exhibit excessively high reactivity with aliphatic polyamides. For example, an amino group, an epoxy group and a hydroxyl group exhibit lower reactivity with aliphatic polyamides than acid anhydride groups. Therefore, an elastomer having an amino group, an epoxy group, or a hydroxyl group does not excessively inhibit the crystallization of aliphatic polyamides. As a result, in a case where an elastomer having an amino group, an epoxy group, or a hydroxyl group is used, stable type crystals are more likely to be generated and/or grow than in a case where an elastomer having an acid anhydride group is used. Therefore, as the reactive functional group is at least one selected from the group consisting of an amino group, an epoxy group, and a hydroxyl group, the stable type fraction of a molded article produced using the polyamide composition can be increased.

[5]

The polyamide composition according to any one of [1] to [4], in which the reactive functional group is at least one of an amino group or an epoxy group.

According to [5], as the reactive functional group is at least one of an amino group or an epoxy group, the stable type fraction of a molded article produced using the polyamide composition can be increased.

[6]

The polyamide composition according to any one of [1] to [5], in which a ratio of X to Y is 0.95 or more when a -40°C tensile yield strain of the test piece is denoted as X% and a -40°C tensile yield strain of an aliphatic polyamide test piece molded by allowing the aliphatic polyamide to flow at 270°C and then injecting the aliphatic polyamide into a mold at 80°C is denoted as Y%.

The present invention can also have the following configuration [7].

A molded article containing:

an aliphatic polyamide; and
an elastomer having a reactive functional group, in which
a stable type fraction of a crystal structure of the aliphatic polyamide is 0.55 or more and less than 1.00, in which the stable type fraction is represented by $S_p/(S_p + M_p)$,
where $S_p$ is a peak area attributed to a stable type crystal in an X-ray diffraction diagram, and
$M_p$ is a peak area attributed to a metastable type crystal in the X-ray diffraction diagram.

According to [7], as the molded article contains an elastomer having a reactive functional group, the impact resistance, specifically the impact resistance at low temperatures, can be improved.

Moreover, as the stable type fraction (that is, the stable type fraction of the crystal structure of the aliphatic polyamide in the molded article) is 0.55 or more, excellent toughness can be exhibited at low temperatures. This will be explained. In polyamide 6, $\alpha$-type crystals and $\gamma$-type crystals are known. In $\alpha$-type crystals, adjacent molecular chains that make up the $\alpha$-type crystals are aligned in opposite directions to each other, that is, in antiparallel. The molecular chains that make up the $\alpha$-type crystals are fully extended and form hydrogen bonds with adjacent molecular chains. In $\alpha$-type crystals, the sheets formed by these molecular chains are stacked one on top of the other. Meanwhile, in $\gamma$-type crystals, adjacent molecular chains that make up the $\gamma$-type crystals are aligned in parallel. The molecular chains that make up the $\gamma$-type crystals have a somewhat shrunken conformation compared to the molecular chains that make up the $\alpha$-type crystals, and form hydrogen bonds with adjacent molecular chains. In $\gamma$-type crystals, pleated sheets formed by these molecular chains are stacked one on top of the other. $\gamma$-Type crystals having such a structure are crystals that are less dense and are inferior in stability than $\alpha$-type crystals. In other words, $\alpha$-type crystals are denser and are superior in stability than $\gamma$-type crystals. It can be said that $\alpha$-type crystals are less likely to crumble when subjected to external force (for example, when subjected to a tensile test) than $\gamma$-type crystals. According to [7], since the stable type fraction is 0.55 or more, that is, stable type crystals (for example, $\alpha$-type crystals when the aliphatic polyamide is polyamide 6), which are less likely to crumble than metastable type crystals (for example, $\gamma$-type crystals when the aliphatic polyamide is polyamide 6), are present to a certain degree or more, the tensile yield strain, specifically the tensile yield strain at low temperatures, can be improved. In other words, the toughness at low temperatures can be improved.

In the present invention, the following configuration of [8] is preferable.

The molded article according to [7], in which

the aliphatic polyamide is polyamide 6,
the stable type crystal is an $\alpha$-type crystal, and
the metastable type crystal is a $\gamma$-type crystal.

The molded article according to [8] can be rephrased as follows.

A molded article containing:

polyamide 6; and

an elastomer having a reactive functional group, in which

an $\alpha$-type fraction of a crystal structure of the polyamide 6 is 0.55 or more and less than 1.00, in which

the $\alpha$-type fraction is represented by $\alpha_p/(\alpha_p + \gamma_p)$,

where $\alpha_p$ is a peak area attributed to an $\alpha$-type crystal in an X-ray diffraction diagram, and

$\gamma_p$ is a peak area attributed to a $\gamma$-type crystal in the X-ray diffraction diagram.

In the present invention, the following configurations of [9] to [26] are also preferable.

[9] The polyamide composition according to any one of [1] to [6], in which the elastomer is a styrene-based thermoplastic elastomer.

[10] The polyamide composition according to any one of [1] to [6] and [9], in which the elastomer is a styrene-butadiene-styrene triblock copolymer (SBS) or a styrene-ethylene-butylene-styrene copolymer (SEBS).

[11] The polyamide composition according to any one of [1] to [6], [9] and [10], in which the elastomer is a styrene-ethylene-butylene-styrene copolymer (SEBS).

[12] The polyamide composition according to any one of [1] to [6], in which the elastomer is an olefin-unsaturated carboxylate copolymer.

[13] The polyamide composition according to [12], in which the unsaturated carboxylate of the olefin-unsaturated carboxylate copolymer is glycidyl acrylate or glycidyl methacrylate.

[14] The polyamide composition according to any one of [1] to [6], [12], and [13], in which the elastomer is an ethylene-unsaturated carboxylate copolymer.

[15] The polyamide composition according to any one of [1] to [6] and [9] to [14], in which a sum of a content of the aliphatic polyamide and a content of the elastomer is 30% by mass or more or 50% by mass or more.

[16] The polyamide composition according to any one of [1] to [6] and [9] to [14], in which a sum of a content of the aliphatic polyamide and a content of the elastomer is 70% by mass or more or 80% by mass or more.

[17] The polyamide composition according to any one of [1] to [6] and [9] to [14], in which a sum of a content of the aliphatic polyamide and a content of the elastomer is 90% by mass or more or 95% by mass or more.

[18] The polyamide composition according to any one of [1] to [6] and [9] to [14], in which a sum of a content of the aliphatic polyamide and a content of the elastomer is 97% by mass or more.

[19] The polyamide composition according to any one of [1] to [6] and [9] to [18], in which the stable type fraction is 0.60 or more or 0.65 or more.

[20] The polyamide composition according to any one of [1] to [6] and [9] to [18], in which the stable type fraction is 0.70 or more or 0.75 or more.

[21] The polyamide composition according to any one of [1] to [6] and [9] to [18], in which the stable type fraction is 0.80 or more.

[22] The polyamide composition according to any one of [1] to [6] and [9] to [21], in which the stable type fraction is 0.96 or less or 0.95 or less.

[23] The polyamide composition according to any one of [1] to [6] and [9] to [21], in which the stable type fraction is 0.94 or less or 0.93 or less.

[24] The polyamide composition according to any one of [1] to [6] and [9] to [21], in which the stable type fraction is 0.92 or less or 0.91 or less.

[25] The polyamide composition according to any one of [1] to [6] and [9] to [21], in which the stable type fraction is 0.90 or less.

[26] A molded article obtained by molding the polyamide composition according to any one of [1] to [6] and [9] to [25].

In the present invention, the following configurations of [27] to [43] are also preferable.

[27] The molded article according to [7] or [8], in which the elastomer is a styrene-based thermoplastic elastomer.

[28] The molded article according to any one of [7], [8], and [27], in which the elastomer is a styrene-butadiene-styrene triblock copolymer (SBS) or a styrene-ethylene-butylene-styrene copolymer (SEBS).

[29] The molded article according to any one of [7], [8], [27] and [28], in which the elastomer is a styrene-ethylene-butylene-styrene copolymer (SEBS).

[30] The molded article according to [7] or [8], in which the elastomer is an olefin-unsaturated carboxylate copolymer.

[31] The molded article according to [30], in which the unsaturated carboxylate of the olefin-unsaturated carboxylate copolymer is glycidyl acrylate or glycidyl methacrylate.

[32] The molded article according to any one of [7], [8], [30], and [31], in which the elastomer is an ethylene-unsaturated carboxylate copolymer.

[33] The molded article according to any one of [7], [8], and [27] to [32], in which a sum of a content of the aliphatic

EP 4 656 683 A1

polyamide and a content of the elastomer is 30% by mass or more or 50% by mass or more.

[34] The molded article according to any one of [7], [8], and [27] to [32], in which a sum of a content of the aliphatic polyamide and a content of the elastomer is 70% by mass or more or 80% by mass or more.

[35] The molded article according to any one of [7], [8], and [27] to [32], in which a sum of a content of the aliphatic polyamide and a content of the elastomer is 90% by mass or more or 95% by mass or more.

[36] The molded article according to any one of [7], [8], and [27] to [32], in which a sum of a content of the aliphatic polyamide and a content of the elastomer is 97% by mass or more.

[37] The molded article according to any one of [7], [8], and [27] to [36], in which the stable type fraction is 0.60 or more or 0.65 or more.

[38] The molded article according to any one of [7], [8], and [27] to [36], in which the stable type fraction is 0.70 or more or 0.75 or more.

[39] The molded article according to any one of [7], [8], and [27] to [36], in which the stable type fraction is 0.80 or more.

[40] The molded article according to any one of [7], [8], and [27] to [39], in which the stable type fraction is 0.96 or less or 0.95 or less.

[41] The molded article according to any one of [7], [8], and [27] to [39], in which the stable type fraction is 0.94 or less or 0.93 or less.

[42] The molded article according to any one of [7], [8], and [27] to [39], in which the stable type fraction is 0.92 or less or 0.91 or less.

[43] The molded article according to any one of [7], [8], and [27] to [39], in which the stable type fraction is 0.90 or less.

EFFECT OF THE INVENTION

According to the present invention, it is possible to provide a polyamide composition that can be molded into a molded article, which is excellent in impact resistance at low temperatures and also excellent in toughness at low temperatures. According to the present invention, it is possible to provide a molded article, which is excellent in impact resistance at low temperatures and also excellent in toughness at low temperatures.

MODE FOR CARRYING OUT THE INVENTION

Hereinafter, embodiments of the present invention will be described in detail.

<1. Polyamide composition>

The polyamide composition of the present embodiment contains an aliphatic polyamide. Examples of the aliphatic polyamide include polyamide 6, polyamide 8, polyamide 10, and polyamide 12. Among these, polyamide 6 is preferred.

Polyamide 6 can be a polyamide resin of which the main raw materials are $\varepsilon$-caprolactam and/or 6-aminocaproic acid. Among these, polyamide 6 is preferably a polyamide resin of which the main raw material is $\varepsilon$-caprolactam. Polyamide 6 may be copolymerized with another monomer. Examples of such a monomer include amino acids such as 11-aminoundecanoic acid, 12-aminododecanoic acid, and para-aminomethylbenzoic acid, lactams such as $\omega$-laurolactam; aliphatic diamines such as tetramethylenediamine, pentamethylenediamine, hexamethylenediamine, 2-methylpentamethylenediamine, undecamethylenediamine, dodecamethylenediamine, 2,2,4-/2,4,4-trimethylhexamethylenediamine, and 5-methylnonamethylenediamine; aromatic diamines such as metaxylylenediamine and paraxylylenediamine; alicyclic diamines such as 1,3-bis(aminomethyl)cyclohexane, 1,4-bis(aminomethyl)cyclohexane, 1-amino-3-aminomethyl-3,5,5-trimethylcyclohexane, bis(4-aminocyclohexyl)methane, bis(3-methyl-4-aminocyclohexyl)methane, 2,2-bis(4-aminocyclohexyl)propane, bis(aminopropyl)piperazine, and aminoethylpiperazine; aliphatic dicarboxylic acids such as adipic acid, suberic acid, azelaic acid, sebacic acid, and dodecanedioic acid; aromatic dicarboxylic acids such as terephthalic acid, isophthalic acid, 2-chloroterephthalic acid, 2-methylterephthalic acid, 5-methylisophthalic acid, 5-sulfoisophthalic acid sodium salt, hexahydroterephthalic acid, and hexahydroisophthalic acid; and alicyclic dicarboxylic acids such as 1,4-cyclohexanedicarboxylic acid, 1,3-cyclohexanedicarboxylic acid, 1,2-cyclohexanedicarboxylic acid, and 1,3-cyclopentanedicarboxylic acid. Two or more kinds of these may be copolymerized.

In 100 mol% of the sum of monomer units constituting polyamide 6, the sum of the unit derived from $\varepsilon$-caprolactam and the unit derived from 6-aminocaproic acid is preferably 60 mol% or more, more preferably 70 mol% or more, still more preferably 80 mol% or more, still more preferably 90 mol% or more. This may be 100 mol%. The same applies to each of the suitable range of the number of units derived from $\varepsilon$-caprolactam and the suitable range of the number of units derived from 6-aminocaproic acid. In other words, the description of the sum of the unit derived from $\varepsilon$-caprolactam and the unit derived from 6-aminocaproic acid can also be treated as the description of each of the number of units derived from $\varepsilon$-caprolactam and the number of units derived from 6-aminocaproic acid.

The relative viscosity of the aliphatic polyamide is preferably 1.5 or more, more preferably 2.0 or more, still more preferably 2.5 or more. When the relative viscosity is 1.5 or more, the toughness at low temperatures can be further improved. The relative viscosity of polyamide 6 is preferably 5.0 or less, more preferably 4.5 or less, still more preferably 4.0 or less. When the relative viscosity is 5.0 or less, an excessive decrease in fluidity can be suppressed when the polyamide composition is melted and allowed to flow. The relative viscosity is a value measured at 25°C and 1 g/dL of sample (for example, polyamide 6) using 96% sulfuric acid in conformity with JIS K6920-2: 2009.

The polyamide composition of the present embodiment further contains an elastomer having a reactive functional group. As the polyamide composition contains an elastomer having a reactive functional group, the impact resistance of a molded article produced using the polyamide composition, specifically, the impact resistance at low temperatures (for example, -40°C), can be improved. Moreover, as the elastomer has a reactive functional group, it is possible to enhance the compatibility of the elastomer with the aliphatic polyamide, and as a result, excessive pulsation of the strand during production of the polyamide composition can be suppressed.

Examples of the elastomer include diene-based rubbers such as polybutadiene, polyisoprene, random copolymers of styrene-butadiene, block copolymers of styrene-butadiene, hydrogenated products of styrene-butadiene block copolymers, acrylonitrile-butadiene copolymers, and butadiene-isoprene copolymers. In addition to these, examples of the elastomer also include random copolymers of ethylene-propylene, block copolymers of ethylene-propylene, random copolymers of ethylene-butene, block copolymers of ethylene-butene, and copolymers of ethylene and $\alpha$-olefins. Examples of the elastomer also include ethylene-unsaturated carboxylate copolymers such as ethylene-methacrylate and ethylene-butyl acrylate. Examples of the elastomer also include acrylate-butadiene copolymers, such as butyl acrylate-butadiene copolymers. Examples of the elastomer also include copolymers of ethylene and vinyl fatty acids such as ethylene-vinyl acetate, ethylene-propylene non-conjugated diene terpolymers such as ethylene-propylene-ethylidenenorbornene copolymers and ethylene-propylene-hexadiene copolymers, butylene-isoprene copolymers, chlorinated polyethylene, polyamide elastomers, and polyester elastomers. These may be used singly or two or more kinds thereof may be used.

Although there are some that overlap with the examples given so far regarding elastomers, examples of the elastomer that can be given from a different angle include amide-based thermoplastic elastomers, ester-based thermoplastic elastomers, olefin-based thermoplastic elastomers, styrene-based thermoplastic elastomers, urethane-based thermoplastic elastomers, and crosslinked thermoplastic rubbers.

The elastomer is preferably a thermoplastic elastomer, more preferably a styrene-based thermoplastic elastomer. Examples of the styrene-based thermoplastic elastomers include styrene-isoprene diblock copolymers, styrene-butadiene diblock copolymers, styrene-isoprene-styrene triblock copolymers, styrene-butadiene/isoprene-styrene triblock copolymers, styrene-butadiene-styrene triblock copolymers (SBS), and hydrogenated products thereof (that is, those obtained by subjecting these copolymers to hydrogenation). Examples of the hydrogenated products include styrene-ethylene-butylene-styrene copolymers (SEBS), styrene-ethylene-propylene-styrene copolymers, styrene-ethylene-ethylene-propylene-styrene copolymers, and styrene-butylene-butadiene-styrene copolymers. Among these, SBS and SEBS are preferred, and SEBS is more preferred. These may be used singly or two or more kinds thereof may be used.

The melt mass-flow rate (namely, MFR) of the styrene-based thermoplastic elastomer may be, for example, 0.5 g/10 min or more, 1.0 g/10 min or more, 1.5 g/10 min or more, or 2.0 g/10 min or more. The melt mass-flow rate may be, for example, 10.0 g/10 min or less, 8.0 g/10 min or less, or 6.0 g/10 min or less. The melt mass-flow rate of the styrene-based thermoplastic elastomer is a value measured at 230°C and a load of 2.16 kg in conformity with JIS K 7210-1 2014.

As the elastomer, an olefin-unsaturated carboxylate copolymer such as an ethylene-unsaturated carboxylate copolymer is also preferred. This is because the olefin-unsaturated carboxylate copolymer is excellent in compatibility with aliphatic polyamides, and can further suppress excessive pulsation of the strands during the production of the polyamide composition.

Examples of the olefin of the olefin-unsaturated carboxylate copolymer include ethylene and $\alpha$-olefins having 3 or more carbon atoms. Examples of the $\alpha$-olefins having 3 or more carbon atoms include propylene, 1-butene, 1-pentene, 1-hexene, 1-heptene, 1-octene, 1-nonene, 1-decene, and 1-undecene. The carbon atoms of the $\alpha$-olefins having 3 or more carbon atoms may be, for example, 30 or less, 20 or less, or 15 or less. Among these, ethylene is preferred. These may be used singly or two or more kinds thereof may be used.

Examples of the unsaturated carboxylate of the olefin-unsaturated carboxylate copolymer include unsaturated carboxylates having a reactive functional group, such as glycidyl acrylate and glycidyl methacrylate. Among these, glycidyl acrylate is preferred. Meanwhile, examples of other unsaturated carboxylates (that is, unsaturated carboxylates other than the unsaturated carboxylates having an epoxy group) include (meth)acrylates such as methyl acrylate, methyl methacrylate, ethyl acrylate, ethyl methacrylate, propyl acrylate, propyl methacrylate, n-butyl acrylate, n-butyl methacrylate, isobutyl acrylate, isobutyl methacrylate, t-butyl acrylate, and t-butyl methacrylate. Among these, methyl acrylate and ethyl acrylate are preferred, and methyl acrylate is more preferred. These may be used singly or two or more kinds thereof may be used.

In 100% by mass of the olefin-unsaturated carboxylate copolymer, the amount of the unsaturated carboxylate having a reactive functional group is preferably 0.1 % by mass or more, more preferably 0.5% by mass or more, still more preferably 1% by mass or more, still more preferably 2% by mass or more. When the amount of the unsaturated carboxylate having a reactive functional group is 0.1% by mass or more, the compatibility with the aliphatic polyamide can be further enhanced, and the impact resistance of a molded article produced using the polyamide composition, specifically, the impact resistance at low temperatures can be further improved. Meanwhile, the amount of the unsaturated carboxylate having a reactive functional group is preferably 10% by mass or less, more preferably 7% by mass or less, still more preferably 5% by mass or less.

The melt mass-flow rate (namely, MFR) of the olefin-unsaturated carboxylate copolymer may be, for example, 0.5 g/10 min or more, 2.0 g/10 min or more, 3.0 g/10 min or more, 4.0 g/10 min or more, or 5.0 g/10 min or more. The melt mass-flow rate may be, for example, 10.0 g/10 min or less, 9.0 g/10 min or less, or 8.0 g/10 min or less. The melt mass-flow rate of the olefin-unsaturated carboxylate copolymer is a value measured at 190°C and a load of 21.2 N in conformity with JIS K 7210-1 2014.

The reactive functional group is a functional group that can react with an aliphatic polyamide. The reactive functional group is specifically a functional group that can react with a functional group of an aliphatic polyamide. Examples of the reactive functional group include an amino group, a carboxyl group, a hydroxyl group, an acid anhydride group, an epoxy group, an isocyanate group, a mercapto group, an oxazoline group, and a sulfonic acid group. Among these, an amino group, an epoxy group, and a hydroxyl group are preferred, and an amino group and an epoxy group are more preferred. This is because these reactive functional groups can increase the stable type fraction of a molded article produced using the polyamide composition. This will be explained. An amino group, an epoxy group and a hydroxyl group do not exhibit excessively high reactivity with aliphatic polyamides. For example, an amino group, an epoxy group and a hydroxyl group exhibit lower reactivity with aliphatic polyamides than acid anhydride groups. Therefore, an elastomer having an amino group, an epoxy group, or a hydroxyl group does not excessively inhibit the crystallization of aliphatic polyamides. As a result, in a case where an elastomer having an amino group, an epoxy group, or a hydroxyl group is used, stable type crystals are more likely to be generated and/or grow than in a case where an elastomer having an acid anhydride group is used. Therefore, as the reactive functional group is an amino group, an epoxy group, or a hydroxyl group, the stable type fraction of a molded article produced using the polyamide composition can be increased. The elastomer may have one or two or more of these reactive functional groups.

Examples of the method for introducing the reactive functional group include a method in which a monomer having the reactive functional group is copolymerized and a method in which a monomer having the reactive functional group is graft-polymerized. For example, by copolymerizing at least an olefin and an unsaturated carboxylate such as glycidyl acrylate, an olefin-unsaturated carboxylate copolymer having an epoxy group can be obtained.

The content of the elastomer having a reactive functional group is preferably 1 part by mass or more, more preferably 3 parts by mass or more, still more preferably 5 parts by mass or more, still more preferably 10 parts by mass or more with respect to 100 parts by mass of the sum of the content of the aliphatic polyamide and the content of the elastomer having a reactive functional group. When the content of the elastomer having a reactive functional group is 1 part by mass or more, the impact resistance of a molded article produced using the polyamide composition, specifically, the impact resistance at low temperatures can be further improved. The content of the elastomer having a reactive functional group is preferably 18 parts by mass or less, more preferably 17 parts by mass or less, still more preferably 16 parts by mass or less, still more preferably 15 parts by mass or less. When the content of the elastomer having a reactive functional group is 18 parts by mass or less, excessive pulsation of the strand during production of the polyamide composition can be further suppressed. In addition to this, it may be possible to avoid an excessive increase in viscosity when the polyamide composition is allowed to flow.

The elastomer having a reactive functional group can be dispersed in the polyamide composition of the present embodiment. For example, the elastomer having a reactive functional group can be dispersed in particulate form in a continuous phase containing the aliphatic polyamide. In this case, the polyamide composition of the present embodiment may include a continuous phase containing an aliphatic polyamide and a dispersed phase containing an elastomer having a reactive functional group.

The polyamide composition of the present embodiment may contain components other than the aliphatic polyamide and the elastomer having a reactive functional group, for example, elastomers not having a reactive functional group, light or heat stabilizers, antioxidants, ultraviolet absorbers, light stabilizers, plasticizers, lubricants, crystal nucleating agents, release agents, anti-static agents, halogen-based flame retardants, antimony trioxide, phosphoric acid-based flame retardants, melamine-based flame retardants, inorganic pigments, organic pigments, and dyes. Of course, the polyamide composition of the present embodiment may contain polyamides other than the aliphatic polyamide, and various polymers.

In 100% by mass of polyamides contained in the polyamide composition of the present embodiment, the amount of the aliphatic polyamide is preferably 80% by mass or more, more preferably 90% by mass or more, still more preferably 95% by mass or more, still more preferably 98% by mass or more, still more preferably 100% by mass.

In 100% by mass of the polyamide composition of the present embodiment, the sum of the content of the aliphatic polyamide and the content of the elastomer having a reactive functional group is preferably 30% by mass or more, more preferably 50% by mass or more, still more preferably 70% by mass or more, still more preferably 80% by mass or more, still more preferably 90% by mass or more, still more preferably 95% by mass or more, still more preferably 97% by mass or more. The sum of the content of the aliphatic polyamide and the content of the elastomer containing a reactive functional group may be 100% by mass.

When the polyamide composition of the present embodiment is molded into a test piece (hereinafter sometimes referred to as a "polyamide composition test piece"), the stable type fraction of the crystal structure of the aliphatic polyamide, that is, $S_p/(S_p + M_p)$, is 0.55 or more and less than 1.00. Here, $S_p$ is the peak area attributed to stable type crystals in the X-ray diffraction diagram. $M_p$ is the peak area attributed to metastable type crystals in the X-ray diffraction diagram. The polyamide composition test piece is molded by allowing the polyamide composition of the present embodiment to flow at 270°C and then injecting the polyamide composition into a mold at 80°C. The stable type fraction can be determined by the X-ray diffraction method.

As the stable type fraction (that is, the stable type fraction of the crystal structure of the aliphatic polyamide in a test piece molded by allowing the polyamide composition to flow at 270°C and then injecting the polyamide composition into a mold at 80°C) is 0.55 or more, the toughness of a molded article produced using the polyamide composition, specifically, the toughness at low temperatures (for example, -40°C) can be improved. This will be explained. In polyamide 6, $\alpha$-type crystals and $\gamma$-type crystals are known. In $\alpha$-type crystals, adjacent molecular chains that make up the $\alpha$-type crystals are aligned in opposite directions to each other, that is, in antiparallel. The molecular chains that make up the $\alpha$-type crystals are fully extended and form hydrogen bonds with adjacent molecular chains. In $\alpha$-type crystals, the sheets formed by these molecular chains are stacked one on top of the other. Meanwhile, in $\gamma$-type crystals, adjacent molecular chains that make up the $\gamma$-type crystals are aligned in parallel. The molecular chains that make up the $\gamma$-type crystals have a somewhat shrunken conformation compared to the molecular chains that make up the $\alpha$-type crystals, and form hydrogen bonds with adjacent molecular chains. In $\gamma$-type crystals, pleated sheets formed by these molecular chains are stacked one on top of the other. $\gamma$-Type crystals having such a structure are crystals that are less dense and are inferior in stability than $\alpha$-type crystals. In other words, $\alpha$-type crystals are denser and are superior in stability than $\gamma$-type crystals. It can be said that $\alpha$-type crystals are less likely to crumble when subjected to external force (for example, when subjected to a tensile test) than $\gamma$-type crystals. According to the present embodiment, since the stable type fraction is 0.55 or more, stable type crystals (for example, $\alpha$-type crystals when the aliphatic polyamide is polyamide 6), which are less likely to crumble than metastable type crystals (for example, $\gamma$-type crystals when the aliphatic polyamide is polyamide 6), can be generated to a certain degree or more in a molded article produced using the polyamide composition, and therefore, the tensile yield strain, specifically the tensile yield strain at low temperatures, can be improved. In other words, the toughness at low temperatures can be improved.

The stable type fraction is preferably 0.60 or more, more preferably 0.65 or more, still more preferably 0.70 or more, still more preferably 0.75 or more, still more preferably 0.80 or more. The stable type fraction may be, for example, 0.96 or less, 0.95 or less, 0.94 or less, 0.93 or less, 0.92 or less, 0.91 or less, or 0.90 or less.

The stable type fraction can be adjusted by, for example, the content of the elastomer having a reactive functional group, the kind of the reactive functional group of the elastomer, the melting temperature when the polyamide composition is prepared, the screw rotation speed for melt-kneading when the polyamide composition is prepared, the melting temperature when a polyamide composition test piece is molded, and the temperature of the mold when a polyamide composition test piece is molded. For example, in polyamide 6, the stable type fraction is higher as the melting temperature when a polyamide composition test piece is molded and the temperature of the mold when a polyamide composition test piece is molded are higher. This is because the crystallization temperature of the $\alpha$-type crystals is higher than the crystallization temperature of the $\gamma$-type crystals. The kind of reactive functional group of the elastomer tends to relatively greatly affect the stable type fraction.

The -40°C tensile yield strain of the polyamide composition test piece is preferably 7.5% or more, more preferably 7.7% or more, still more preferably 7.8% or more. The -40°C tensile yield strain of the polyamide composition test piece may be, for example, 9.0% or less, 8.5% or less, or 8.3% or less.

It is preferable that the ratio of X to Y is 0.95 or more when the -40°C tensile yield strain of the polyamide composition test piece is denoted as X% and the -40°C tensile yield strain of an aliphatic polyamide test piece molded by allowing the aliphatic polyamide to flow at 270°C and then injecting the aliphatic polyamide into a mold at 80°C is denoted as Y%. When the ratio of X to Y is 0.95 or more, it can be said that the -40°C tensile yield strain of the polyamide composition test piece is equal to or more than the -40°C tensile yield strain of the aliphatic polyamide. Hence, it can be said that the toughness of a molded article produced using the polyamide composition, specifically, the toughness at low temperatures is equal to or more than that of a molded article produced using only the aliphatic polyamide. This ratio is preferably 0.98 or more, more preferably 1.00 or more. This ratio may be, for example, 1.10 or less, 1.07 or less, 1.05 or less, 1.04 or less, or 1.03 or less.

The -40°C Charpy impact strength of the polyamide composition test piece is preferably 3.0 kJ/m² or more.

The polyamide composition of the present embodiment can be produced by melt-kneading at least an aliphatic polyamide and an elastomer having a reactive functional group. For the melt-kneading, an extruder (for example, a single-screw extruder or a twin-screw extruder), a kneader, a Banbury mixer, a roll, and the like can be used. Among these, an extruder is preferred, and a twin-screw extruder is more preferred.

For example, the polyamide composition of the present embodiment can be produced by a method in which at least an aliphatic polyamide and an elastomer having a reactive functional group are melt-kneaded using a twin-screw extruder, and then extruded into strands, and the strands are cooled, if necessary, and cut, if necessary. Examples of the method for feeding the respective components (for example, the aliphatic polyamide and the elastomer having a reactive functional group) described above into a twin-screw extruder include a method in which the respective components are mixed using a tumbler, a Henschel mixer or the like and then fed into a twin-screw extruder from the hopper all at once, and a method in which a portion of each component is fed into a twin-screw extruder through a side inlet.

The screw rotation speed of the twin-screw extruder is preferably 50 rpm or more, more preferably 100 rpm or more, still more preferably 150 rpm or more. When the screw rotation speed is 50 rpm or more, the reaction of the aliphatic polyamide with the elastomer having a reactive functional group is likely to be promoted and the compatibility can be further enhanced. Meanwhile, the screw rotation speed of the twin-screw extruder is preferably 400 rpm or less, more preferably 300 rpm or less, still more preferably 250 rpm or less. When the screw rotation speed is 400 rpm or less, an excessive temperature rise due to shear heating can be suppressed, and therefore decomposition of the aliphatic polyamide can be suppressed. The barrel temperature can be set appropriately.

As the screws of the twin-screw extruder, full flight screws, reverse full flight screws, cross kneading discs, forward kneading discs, reverse kneading discs, and the like can be used in appropriate combination. It is preferable that kneading discs in the forward feed direction are incorporated into the screw configuration in the plasticization zone.

The shape of the polyamide composition of the present embodiment can be appropriately set. The polyamide composition of the present embodiment may be, for example, in the form of pellets, strands, or powder, or may be molded into an arbitrary shape. Among these, the form of pellets is preferred.

<2. Molded article>

The molded article of the present embodiment contains an aliphatic polyamide. The description of the aliphatic polyamide overlaps with the description (that is, the description of the aliphatic polyamide in the polyamide composition) described above and will be omitted. Hence, the description of the aliphatic polyamide in the polyamide composition can also be treated as the description of the aliphatic polyamide in the molded article.

The molded article of the present embodiment contains an elastomer having a reactive functional group. The description of the elastomer having a reactive functional group overlaps with the description (that is, the description of the elastomer having a reactive functional group in the polyamide composition) described above and will be omitted. Hence, the description of the elastomer having a reactive functional group in the polyamide composition can also be treated as the description of the elastomer having a reactive functional group in the molded article.

It goes without saying that the description of the content of the elastomer (specifically, the elastomer having a reactive functional group) in the polyamide composition can also be treated as the description of the content of the elastomer (specifically, the elastomer having a reactive functional group) in the molded article.

The molded article of the present embodiment may contain components other than the aliphatic polyamide and the elastomer having a reactive functional group, for example, elastomers not having a reactive functional group, light or heat stabilizers, antioxidants, ultraviolet absorbers, light stabilizers, plasticizers, lubricants, crystal nucleating agents, release agents, anti-static agents, halogen-based flame retardants, antimony trioxide, phosphoric acid-based flame retardants, melamine-based flame retardants, inorganic pigments, organic pigments, and dyes. Of course, the molded article of the present embodiment may contain polyamides other than the aliphatic polyamide, and various polymers.

In 100% by mass of polyamides contained in the molded article of the present embodiment, the amount of the aliphatic polyamide is preferably 80% by mass or more, more preferably 90% by mass or more, still more preferably 95% by mass or more, still more preferably 98% by mass or more, still more preferably 100% by mass.

In 100% by mass of the molded article of the present embodiment, the sum of the content of the aliphatic polyamide and the content of the elastomer having a reactive functional group is preferably 30% by mass or more, more preferably 50% by mass or more, still more preferably 70% by mass or more, still more preferably 80% by mass or more, still more preferably 90% by mass or more, still more preferably 95% by mass or more, still more preferably 97% by mass or more. The sum of the content of the aliphatic polyamide and the content of the elastomer containing a reactive functional group may be 100% by mass.

In the molded article of the present embodiment, the stable type fraction of the crystal structure of the aliphatic polyamide is 0.55 or more and less than 1.00. In other words, $S_p/(S_p + M_p)$ is 0.55 or more and less than 1.00. Here, $S_p$ is the peak area attributed to stable type crystals in the X-ray diffraction diagram. $M_p$ is the peak area attributed to metastable type crystals in the X-ray diffraction diagram. The stable type fraction can be determined by the X-ray diffraction method.

As the stable type fraction (that is, the stable type fraction of the crystal structure of the aliphatic polyamide in the molded article) is 0.55 or more, excellent toughness can be exhibited at low temperatures. This will be explained. In polyamide 6, $\alpha$-type crystals and $\gamma$-type crystals are known. In $\alpha$-type crystals, adjacent molecular chains that make up the $\alpha$-type crystals are aligned in opposite directions to each other, that is, in antiparallel. The molecular chains that make up the $\alpha$-type crystals are fully extended and form hydrogen bonds with adjacent molecular chains. In $\alpha$-type crystals, the sheets formed by these molecular chains are stacked one on top of the other. Meanwhile, in $\gamma$-type crystals, adjacent molecular chains that make up the $\gamma$-type crystals are aligned in parallel. The molecular chains that make up the $\gamma$-type crystals have a somewhat shrunken conformation compared to the molecular chains that make up the $\alpha$-type crystals, and form hydrogen bonds with adjacent molecular chains. In $\gamma$-type crystals, pleated sheets formed by these molecular chains are stacked one on top of the other. $\gamma$-Type crystals having such a structure are crystals that are less dense and are inferior in stability than $\alpha$-type crystals. In other words, $\alpha$-type crystals are denser and are superior in stability than $\gamma$-type crystals. It can be said that $\alpha$-type crystals are less likely to crumble when subjected to external force (for example, when subjected to a tensile test) than $\gamma$-type crystals. According to the present embodiment, since the stable type fraction is 0.55 or more, that is, stable type crystals (for example, $\alpha$-type crystals when the aliphatic polyamide is polyamide 6), which are less likely to crumble than metastable type crystals (for example, $\gamma$-type crystals when the aliphatic polyamide is polyamide 6), are present to a certain degree or more, the tensile yield strain, specifically the tensile yield strain at low temperatures, can be improved. In other words, the toughness at low temperatures can be improved.

The stable type fraction is preferably 0.60 or more, more preferably 0.65 or more, still more preferably 0.70 or more, still more preferably 0.75 or more, still more preferably 0.80 or more. The stable type fraction may be, for example, 0.96 or less, 0.95 or less, 0.94 or less, 0.93 or less, 0.92 or less, 0.91 or less, or 0.90 or less.

The molded article of the present embodiment can be obtained by molding the polyamide composition of the present embodiment described above. In other words, the molded article of the present embodiment can be obtained from the polyamide composition of the present embodiment described above. Examples of the molding method include injection molding, extrusion molding, and blow molding. Among these, injection molding is preferred.

The melting temperature when the molded article is molded can be appropriately set depending on the kind of aliphatic polyamide, but is preferably higher than the melting point of the aliphatic polyamide by 15°C or more. In a case where the aliphatic polyamide is polyamide 6, the melting temperature is preferably 240°C or more, more preferably 250 or more, still more preferably 260°C or more, still more preferably 265°C or more, still more preferably 270°C or more. When the melting temperature is 240°C or more, the generation of unmelted substances and the occurrence of short circuits can be diminished. Meanwhile, the melting temperature is preferably 300°C or less, more preferably 290°C or less, still more preferably 285°C or less, still more preferably 280°C or less. When the melting temperature is 300°C or less, decomposition of polyamide 6 can be suppressed.

In a case where the molded article is molded using a mold, the temperature of the mold can be appropriately set depending on the kind of aliphatic polyamide, but is preferably higher than the glass transition temperature of the aliphatic polyamide by 20°C or more in order to promote the crystallization of the aliphatic polyamide. The temperature of the mold is more preferably higher than the glass transition temperature of the aliphatic polyamide by 25°C or more, still more preferably higher than the glass transition temperature by 30°C or more. In a case where the aliphatic polyamide is polyamide 6, the temperature of the mold is preferably 70°C or more, more preferably 75°C or more, still more preferably 80°C or more. When the temperature of the mold is 70°C or more, crystallization can be effectively promoted. The temperature of the mold is preferably 100°C or less, more preferably 90°C or less. When the temperature of the mold is 100°C or less, defective release from the mold due to defective solidification can be suppressed, and moreover, an excessive increase in the cycle time due to an excessive decrease in the solidification rate can be suppressed.

The molded article of the present embodiment can be suitably used for machine parts, electrical and electronic parts, vehicles (automobiles, railway cars, bicycles, and the like), miscellaneous goods parts, and the like. In particular, the molded article of the present embodiment can be suitably used for machine parts, electrical and electronic parts, vehicles, miscellaneous goods parts, and the like that may be used at low temperatures.

The molded article of the present embodiment can be, for example, a duct, a cable tie, a liquid/gas transport pipe, or a liquid/gas sealed container. In particular, the molded article of the present embodiment is preferably a duct for a vehicle, a cable tie for a vehicle, a liquid/gas transport pipe for a vehicle, or a liquid/gas sealed container for a vehicle.

EXAMPLES

Hereinafter, the present invention will be more specifically described by reference to Examples and Comparative Examples. Hereinafter, "parts" means "parts by mass" and "%" means "% by mass" unless otherwise stated.

<1. Raw materials>

The following raw materials were used.

<1.1. Polyamide>

A-1 "GLAMIDE (registered trademark) T-802" manufactured by Toyobo Co., Ltd. (polyamide 6, relative viscosity 3.3)

<1.2. Elastomer>

B-1 "TUFTEC (registered trademark) MP10" manufactured by Asahi Kasei Corporation (amine-modified SEBS)
B-2 "BONDFAST (registered trademark) BF-7L" (ethylene-glycidyl methacrylate-based copolymer) manufactured by Sumitomo Chemical Co., Ltd.
B-3 "TUFTEC (registered trademark) M1943" manufactured by Asahi Kasei Corporation (maleic anhydride-modified SEBS)
B-4 "TAFMER (registered trademark) MH5020" manufactured by Mitsui Chemicals, Inc. (maleic anhydride-modified EBR)
B-5 "TUFTEC (registered trademark) H1221" manufactured by Asahi Kasei Corporation (unmodified SEBS)

<2. Production of test piece>

<2.1. Examples 1 to 4 and Comparative Examples 2 to 6>

A polyamide and an elastomer were blended at predetermined proportions (see Table 1) and melt-kneaded at a resin temperature of 270°C and a screw rotation speed of 150 rpm using a twin-screw extruder Tex25 (manufactured by THE JAPAN STEEL WORKS, LTD.), and the strands were discharged into water and cut into pellets. The pellets were dried and then molded into a 1A-type test piece having a thickness of 4 mm in conformity with JIS K 7161-2 2014 at a resin temperature of 270°C and a mold temperature of 80°C using an injection molding machine J-110 (manufactured by THE JAPAN STEEL WORKS, LTD.).

<2.2. Comparative Example 1>

Pellets and a 1A-type test piece were produced in the same manner as in Example 1, except that an elastomer was not blended.

<3. Evaluation methods>

<3.1. Strand stability>

In a case where the pulsation of the strands was so great that cutting, that is, pelletizing of continuous strands was difficult, the strand stability was judged to be Poor. On the other hand, in a case where the pulsation of the strands was to such an extent that the pulsation did not interfere with pelletizing, the strand stability was judged to be Favorable.

<3.2. Melt mass-flow rate (MFR)>

The pellets were dried, then packed into the cylinder of a plastometer, and extruded through a die at 280°C and a load of 10 kg in conformity with ISO 1133 to determine the MFR, namely, melt index (g/10 min).

<3.3. $\alpha$-Type fraction>

A sample was cut out from the center of the 1A-type test piece (that is, the middle of the portion having a narrow width of the 1A-type test piece), and the X-ray diffraction diagram (that is, X-ray diffraction profile, X-ray diffraction spectrum) of this sample was acquired by the wide angle X-ray diffraction method. The measurement conditions were as follows.

Instrument: Empyrean manufactured by Spectris
Attachment: Rotating sample stage
X-ray source: CuK$\alpha$
Output: 45 kV, 40 mA

Detector: PIXcel3D

From the X-ray diffraction diagram, specifically the X-ray diffraction diagram in which the X-ray intensity (counts per second) was plotted on the vertical axis and $2\theta$ (°) was plotted on the horizontal axis, the peak area attributed to the $\alpha$-type crystals of polyamide 6 and the peak area attributed to the $\gamma$-type crystals of polyamide 6 were determined. Based on these, the $\alpha$-type fraction was calculated using the following equation.

$$\alpha\text{-Type fraction} = \alpha_p/(\alpha_p + \gamma_p)$$

Here, $\alpha_p$ is the peak area attributed to the $\alpha$-type crystals of polyamide 6. $\gamma_p$ is the peak area attributed to the $\gamma$-type crystals of polyamide 6.

<3.4. Tensile yield strain>

In conformity with JIS K 7161-1 2014, the tensile yield strain of the 1A-type test piece was measured at -40°C. Specifically, a tensile test was conducted on the 1A-type test piece at -40°C, a test speed of 50 mm/min, and a grip distance of 115 mm, and then the tensile yield strain was determined from the stress-strain curve acquired by the tensile test.

<3.5. Charpy impact strength>

The pellets were dried and then molded into a notched test piece at a resin temperature of 270°C and a mold temperature of 80°C using an injection molding machine J-110 (manufactured by THE JAPAN STEEL WORKS, LTD.). The notched Charpy impact strength was measured at -40°C in conformity with ISO 179-1. The notched Charpy impact strength was indicated to be Favorable in a case of being 3 kJ/m$^2$ or more, and to be Poor in a case of being less than 3 kJ/m$^2$.

[Table 1]

| | | Example 1 | Example 2 | Example 3 | Example 4 | Comparative Example 1 | Comparative Example 2 | Comparative Example 3 | Comparative Example 4 | Comparative Example 5 | Comparative Example 6 |
|---|---|---|---|---|---|---|---|---|---|---|---|
| Composition (parts by mass) | Polyamide | A-1 95 | A-1 85 | A-1 95 | A-1 85 | A-1 100 | A-1 95 | A-1 85 | A-1 95 | A-1 85 | A-1 85 |
| | Elastomer | B-1 5 | B-1 15 | B-2 5 | B-2 15 | 0 | B-3 5 | B-3 15 | B-4 5 | B-4 15 | B-5 15 |
| Crystal type | $\alpha$ | 0.72 | 0.83 | 0.78 | 0.89 | 0.89 | 0.54 | 0.49 | 0.44 | 0.39 | - |
| | $\gamma$ | 0.28 | 0.17 | 0.22 | 0.11 | 0.11 | 0.46 | 0.51 | 0.56 | 0.61 | - |
| | $\alpha/(\alpha + \gamma)$ | 0.72 | 0.83 | 0.78 | 0.89 | 0.89 | 0.54 | 0.49 | 0.44 | 0.39 | - |
| Physical properties | -40°C tensile yield strain (%) | 7.8 | 7.8 | 8.0 | 8.1 | 7.8 | 6.9 | 7.0 | 7.4 | 7.4 | - |
| | (X/Y) × 100 | 100 | 100 | 102 | 103 | 100 | 88 | 89 | 94 | 94 | - |
| | -40°C Charpy impact strength (kJ/m$^2$) | Favorable | Favorable | Favorable | Favorable | **Poor** | Favorable | Favorable | Favorable | Favorable | - |
| | MFR (g/10 min) | 94 | 110 | 65 | 36 | 89 | 72 | 38 | 44 | 15 | 186 |
| | Strand stability | Favorable | Favorable | Favorable | Favorable | Favorable | Favorable | Favorable | Favorable | Favorable | Poor |

In Table 1, "$\alpha$" means the peak area attributed to the $\alpha$-type crystals of polyamide 6. "$\gamma$" means the peak area attributed to the $\gamma$-type crystals of polyamide 6.

In "(X/Y) $\times$ 100", "X" means the -40°C tensile yield strain of the 1A-type test pieces produced in Examples and Comparative Examples described above. "Y" means the -40°C tensile yield strain of a 1A-type test piece of polyamide (specifically, A-1), that is, a 1A-type test piece produced using A-1 in the same manner as in Examples and Comparative Examples described above.

"-" means unmeasured.

By using elastomers having reactive functional groups (specifically, B-1, B-2, B-3, and B-4), the -40°C Charpy impact strength could be improved (see Comparative Example 1, Examples 1 to 4, and Comparative Examples 2 to 5).

The -40°C tensile yield strain decreased by using B-3 or B-4 as the elastomer (see Comparative Example 1 and Comparative Examples 2 to 4), but the decrease in the -40°C tensile yield strain could be suppressed by using B-1 or B-2 (see Comparative Example 1 and Examples 1 to 4). According to the X-ray diffraction, a large decrease in the $\alpha$-type fraction was observed in a case of using B-3 and B-4 (see Comparative Example 1 and Comparative Examples 2 to 4), but a significant decrease in the $\alpha$-type fraction was not observed in a case of using B-1 or B-2 (see Comparative Example 1 and Examples 1 to 4). The strand stability was inferior in a case of using B-5.

INDUSTRIAL APPLICABILITY

The present invention can provide a polyamide composition and a molded article, and therefore is industrially applicable.

**Claims**

1. A polyamide composition comprising:

   an aliphatic polyamide; and
   an elastomer having a reactive functional group, wherein
   when the polyamide composition is allowed to flow at 270°C and then injected into a mold at 80°C to mold a test piece, a stable type fraction of a crystal structure of the aliphatic polyamide in the test piece is 0.55 or more and less than 1.00, wherein
   the stable type fraction is represented by $S_p/(S_p + M_p)$,
   where $S_p$ is a peak area attributed to a stable type crystal in an X-ray diffraction diagram, and
   $M_p$ is a peak area attributed to a metastable type crystal in the X-ray diffraction diagram.

2. The polyamide composition according to claim 1, wherein

   the aliphatic polyamide is polyamide 6,
   the stable type crystal is an $\alpha$-type crystal, and
   the metastable type crystal is a $\gamma$-type crystal.

3. The polyamide composition according to claim 1, wherein a content of the elastomer is 1 part by mass to 18 parts by mass with respect to 100 parts by mass of a sum of a content of the aliphatic polyamide and the content of the elastomer.

4. The polyamide composition according to claim 1, wherein the reactive functional group is at least one selected from the group consisting of an amino group, an epoxy group, and a hydroxyl group.

5. The polyamide composition according to claim 1, wherein the reactive functional group is at least one of an amino group or an epoxy group.

6. The polyamide composition according to claim 1, wherein a ratio of X to Y is 0.95 or more when a -40°C tensile yield strain of the test piece is denoted as X% and a -40°C tensile yield strain of an aliphatic polyamide test piece molded by allowing the aliphatic polyamide to flow at 270°C and then injecting the aliphatic polyamide into a mold at 80°C is denoted as Y%.

7. A molded article comprising:

an aliphatic polyamide; and
an elastomer having a reactive functional group, wherein
a stable type fraction of a crystal structure of the aliphatic polyamide is 0.55 or more and less than 1.00, wherein
the stable type fraction is represented by $S_p/(S_p + M_p)$,
where $S_p$ is a peak area attributed to a stable type crystal in an X-ray diffraction diagram, and
$M_p$ is a peak area attributed to a metastable type crystal in the X-ray diffraction diagram.

8.  The molded article according to claim 7, wherein

the aliphatic polyamide is polyamide 6,
the stable type crystal is an $\alpha$-type crystal, and
the metastable type crystal is a $\gamma$-type crystal.

## INTERNATIONAL SEARCH REPORT

| International application No. |
|---|
| **PCT/JP2023/046656** |

### A. CLASSIFICATION OF SUBJECT MATTER

*C08L 77/00*(2006.01)i; *C08L 101/02*(2006.01)i
FI: C08L77/00; C08L101/02

According to International Patent Classification (IPC) or to both national classification and IPC

### B. FIELDS SEARCHED

Minimum documentation searched (classification system followed by classification symbols)
C08L

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2003-26937 A (MITSUBISHI ENGINEERING PLASTICS CORP.) 29 January 2003 (2003-01-29)<br>claims, paragraphs [0001], [0009], [0045], example 5 | 1-8 |
| Y | JP 2001-329167 A (TORAY INDUSTRIES, INC.) 27 November 2001 (2001-11-27)<br>paragraphs [0035], [0040] | 1-8 |
| Y | JP 2013-253215 A (TOYOBO CO., LTD.) 19 December 2013 (2013-12-19)<br>paragraph [0016] | 1-8 |
| Y | JP 62-252426 A (KABUSHIKI KAISHA TOYOTA CHUO KENKYUSHO) 04 November 1987 (1987-11-04)<br>p. 2, upper right column | 1-8 |
| Y | MIYASAKA, K. ISOMOTO, T. UEHARA, K. ISHIKAWA, K. Modulus of Nylon 6 α-phase Crystal in the Chain Direction at Low temperature. Reports on Progress in Polymer Physics in Japan. 1979, 22, pp. 279-280<br>p. 279, fig. 1 | 1-8 |

✓ Further documents are listed in the continuation of Box C.    ✓ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **26 February 2024** | **26 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

International application No.

**PCT/JP2023/046656**

**C. DOCUMENTS CONSIDERED TO BE RELEVANT**

| Category* | Citation of document, with indication, where appropriate, of the relevant passages | Relevant to claim No. |
|---|---|---|
| Y | JP 2014-111761 A (KURARAY CO., LTD.) 19 June 2014 (2014-06-19) claims, paragraphs [0062]-[0064], examples | 4-5 |
| A | JP 4-364950 A (MITSUBISHI PETROCHEM CO., LTD.) 17 December 1992 (1992-12-17) entire text | 1-8 |

**INTERNATIONAL SEARCH REPORT**
Information on patent family members

International application No.

**PCT/JP2023/046656**

| Patent document cited in search report | | | Publication date (day/month/year) | Patent family member(s) | | | Publication date (day/month/year) |
|---|---|---|---|---|---|---|---|
| JP | 2003-26937 | A | 29 January 2003 | (Family: none) | | | |
| JP | 2001-329167 | A | 27 November 2001 | (Family: none) | | | |
| JP | 2013-253215 | A | 19 December 2013 | (Family: none) | | | |
| JP | 62-252426 | A | 04 November 1987 | (Family: none) | | | |
| JP | 2014-111761 | A | 19 June 2014 | (Family: none) | | | |
| JP | 4-364950 | A | 17 December 1992 | US entire text EP | 5314733 518354 | A A1 | |

Form PCT/ISA/210 (patent family annex) (July 2022)

# EP 4 656 683 A1

**Patent documents cited in the description**

- JP 55044108 B
- JP 9031325 A
- JP 10204290 A